# EUROPÄISCHE PATENTANMELDUNG

(11) **EP 0 584 617 A2**
(43) Veröffentlichungstag der Anmeldung: **02.03.1994**
(21) Anmeldenummer: 93112670.0
(22) Anmeldetag: 06.08.1993
(51) Int. Cl.: H04B 7/216

(54) **Satelliten-Nachrichtenübertragungssystem**

(30) Priorität: 26.08.1992 DE 4228270
(71) Anmelder: SIEMENS AKTIENGESELLSCHAFT, D-80333 München (DE)
(72) Erfinder: Münzel, Friedrich, Dipl.-Ing., D-83624 Otterfing (DE); Heina, Gerhard, Dipl.-Ing., D-82275 Emmering (DE)

(57) **Zusammenfassung**

Übliche Satelliten-Nachrichtenübertragungssysteme sind entweder unter Verzicht auf jegliche Flexibilität als Sternnetze mit einer Zentralstation und mehreren Regionalstationen oder mit vergleichsweise hohem Aufwand mit bedarfsgesteuertem Zugriff als DAMA-Systeme oder mit Vermittlung im Satelliten aufgebaut. Erfindungsgemäß wird nun im Hinblick auf eine Verringerung des Aufwandes unter Verzicht auf unnötig teure Flexibilität eine Kombination aus einem Sternnetz und aus einem Maschennetz vorgeschlagen, bei dem die Regionalstationen des Maschennetzes die für andere Regionalstationen bestimmten Übertragungssignale als Codemultiplexsignale im SSMA-Format den Ausgangssignalen für die Zentralstation spektral überlagern und vom Satelliten im Rundstrahlbetrieb an alle Stationen abgegeben werden.

## Beschreibung

Die Erfindung betrifft ein Satelliten-Nachrichtenübertragungssystem entsprechend dem Oberbegriff des Anspruchs 1.

Einfache Satelliten-Nachrichtenübertragungssysteme mit einer Zentralstation und einer Vielzahl über den Satelliten im Rundstrahlbetrieb angeschlossener Regionalstationen sind weit verbreitet und allgemein bekannt. Wegen der sternförmigen Struktur dieser Systeme ist eine Nachrichtenübertragung unmittelbar nur zwischen der Zentralstation und den Regionalstationen möglich. Für den Verkehr der Regionalstationen untereinander müßte von der Zentralstation aus die Nachricht erneut über die Satellitenstrecke übertragen werden. Dieser sogenannte Doppelhop verursacht aber durch die damit verbundene hohe Signallaufzeit Schwierigkeiten bei der Gesprächsabwicklung und ist deshalb nach CCI nicht zulässig. Soll eine Nachrichtenübermittlung zwischen den Regionalstationen ohne Doppelhop möglich sein, dann müssen entsprechende Übertragungskanäle in Satelliten für diese Verbindungen reserviert werden, so daß sich Maschennetze mit fest zugewiesenen Übertragungskanälen ergeben. Da die Zahl der benötigten Kanäle aber quadratisch mit der Zahl der Bodenstationen ansteigt und damit sehr schnell unrealisierbar hoch wird, ist diese Lösung nur für eine sehr geringe Netzgröße realisierbar.

Aus E. Herter, H. Rupp "Nachrichtenübertragung über Satelliten" 2. Auflage, Springer Verlag Berlin, 1983, Seiten 68 bis 70 ist es bereits bekannt, im Satelliten eine Vermittlung vorzusehen und dadurch Verkehr zwischen Regionalstastionen ohne Doppelhop zu ermöglichen. Wegen des gerätetechnischen Aufwandes im Satelliten und der benötigten Stromversorgung hat sich diese Lösung aber bisher nicht durchgesetzt. Eine andere Lösung besteht darin, daß man insbesondere bei größeren Netzen aus einem Pool von Übertragungskanälen bedarfsweise die jeweiligen Verbindungswünsche schaltet. Solche Übertragungssysteme ermöglichen somit einen bedarfsweisen Zugriff zum Satelliten für die einzelnen Stationen und sind unter der Bezeichnung DAMA-Systeme bekannt, wobei DAMA bedarfsgesteuerter Vielfachzugriff (demand assignment multiple access) bedeutet. Derartige DAMA-Systeme können im Zeitmultiplex, im Frequenzmultiplex und im Codemultiplex arbeiten, sie erfordern eine umfangreiche und komplexe Systemsteuerung, die zu entsprechend hohem Geräteaufwand führt.

Das besondere Problem bei diesen Systemen besteht darin, daß bei einem eventuellen Ausfall der Systemsteuerung das gesamte Übertragungsnetz zusammenbricht, so daß erhebliche Redundanzerhöhungen vorgesehen werden müssen, um das System betriebssicher zu gestalten. Wegen des damit sehr stark erhöhten Aufwandes konnten sich DAMA-Übertragungssysteme trotz ihrer Flexibilität bisher nur wenig durchsetzen.

Die Aufgabe bei der vorliegenden Erfindung besteht also darin, ein Satelliten-Nachrichtenübertragungssystem der eingangs erwähnten Art so weiterzubilden, daß mit nur einer Übertragung über den Satelliten direkte Nachrichtenübertragung zwischen Regionalstationen möglich ist und bei möglichst geringem Aufwand eine robuste und damit betriebssichere Struktur ermöglicht wird.

Erfindungsgemäß wird die Aufgabe durch ein Satelliten-Nachrichtenübertragungssystem der eingangs erwähnten Art gelöst, daß durch die im Kennzeichen des Patentanspruchs 1 aufgeführten Merkmale weitergebildet ist. Das erfindungsgemäße Satelliten-Nachrichtenübertragungssystem bietet die besonderen Vorteile, daß durch die Führung des hauptsächlichen Verkehrsanteils im Sternnetz sehr effektive Codierungs- und Multiplextechniken verwendet werden können, die zur Kostensenkung beitragen und außerdem das erfindungsgemäße Satelliten-Nachrichtenübertragungssystem optimal an die Verkehrsstatistik von Regionalnetzen angepaßt ist und dadurch unter Verzicht auf übermäßig hohe und damit teure Flexibilität besonders wirtschaftliche Lösungen ermöglicht. Die Übertragungssignale des Maschennetzes können, abhängig von den zu übertragenden Kanalzahlen, zum einen den Übertragungssignalen des Sternnetzes spektral überlagert werden und zum anderen in einem separaten Frequenzband über den Satelliten übertragen werden. Durch die spektrale Überlagerung der Übertragungssignale des zusätzlichen Maschennetzes zu den Übertragungssignalen des Sternnetzes ergibt sich als weiterer Vorteil, daß im Satelliten keine zusätzliche Bandbreite benötigt wird, außerdem ermöglicht die spektrale Spreizung der Sendesignale durch die Codemultiplex-Übertragung die Verwendung von transportablen Satellitenstationen mit sehr kleinen Sendeantennendurchmesser und damit geringer Bündelungsschärfe der Antenne, da die spektrale Spreizung der Sendesignale, durch die die Bündelung der Sendeenergie auf bestimmte Frequenzen vermieden wird, eine Störung benachbarter Satelliten verhindert. Die Codemultiplextechnik bietet außerdem den Vorteil einer weichen Begrenzung der Kapazität des Maschennetzes, da in Spitzenverkehrszeiten innerhalb gewisser Grenzen die Zahl der Übertragungskanäle bei gleichzeitiger Verminderung der Sprachqualität für kurze Zeit erhöht werden kann, ohne daß das gesamte Maschennetz blockiert wird. Zweckmäßige Weiterbildungen des erfindungsgemäßen Satelliten-Nachrichtenübertragungssystems sind in den Patentansprüchen 2 bis 6 detailliert beschrieben.

Die Erfindung soll im folgenden anhand eines in der Zeichnung dargestellten Ausführungsbeispiels näher erläutert werden.

In der Zeichnung zeigt:
- Fig. 1: die Struktur des erfindungsgemäßen kombinierten Stern- und Maschennetzes und
- Fig. 2: das Blockschaltbild einer im kombinierten Netz nach der Figur 1 verwendeten Regionalstation.

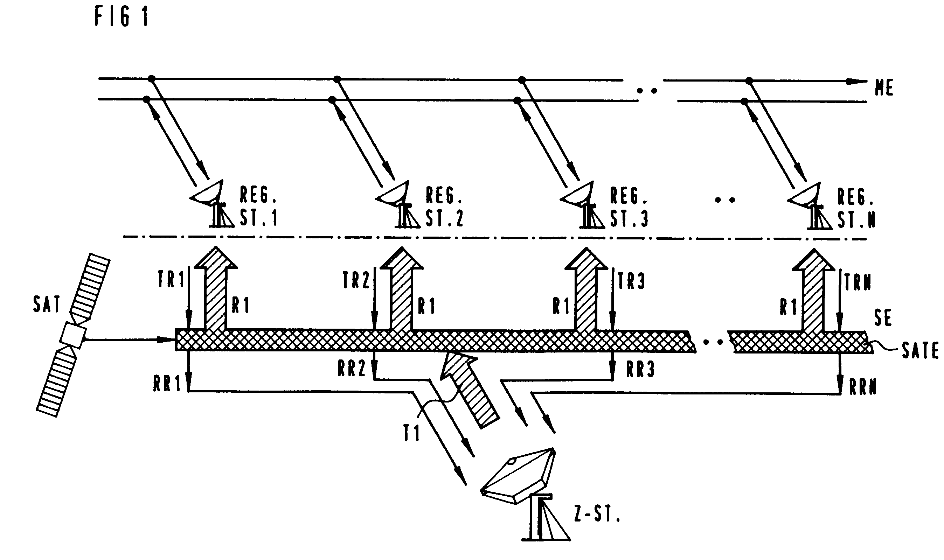

Das in der Figur 1 dargestellte Satelliten-Nachrichtenübertragungssystem enthält eine Zentralstation ZSt, die Regionalstationen Reg.St1... Reg.StN sowie den Satelliten SAT. Das dargestellte Satelliten-Nachrichtenübertragungssystem stellt ein Kombinationsnetz aus einer Maschenebene ME und einer Sternebene SE dar. In der Sternebene SE sendet die Zentralstation ZSt über einen ersten Sende-Träger T1 die für alle Regionalstationen bestimmten Nachrichten zum Satelliten SAT, der nach der üblichen ersten Frequenzumsetzung im Satelliten einen Empfangsträger R1 im Rundstrahlbetrieb zur Erde zurücksendet, der von allen Regionalstationen in gleicher Weise empfangen wird. Die einzelnen Regionalstationen detektieren den für sie bestimmten Nachrichtenanteil. Jede der Regionalstationen ST1 ... STN sendet ihrerseits die für die Zentralstation ZSt bestimmten Nachrichten mit durch die Übertragungsfrequenz ausgezeichneten Sendeträgern TR1...TRN zum Satelliten, nach erneuter Frequenzumsetzung im Satelliten empfängt die Zentralstation eine der Anzahl der Regionalstationen entsprechende Anzahl von weiteren Empfangsträgern RR1...RRN.

Die Zuteilung der Übertragungskapazität für die einzelnen Regionalstationen ist dabei fest fixiert, so daß sich in der Sternebene Festverbindungen ergeben, die beim Ausführungsbeispiel nach dem Intelsat-Standard ausgelegt sind. Über diese Festverbindungen werden ca. 90 % des Gesamtverkehrs abgewickelt, da Untersuchungen ergeben haben, daß der in einer typischen regionalen Vermittlungsstelle abgewickelte Verkehr zu 80 % Externverkehr ist, wovon 90 % zu einer Zentralstation gerichtet ist, die in einer größeren Stadt, beispielsweise der Hauptstadt der betreffenden Region, steht. Lediglich etwa 10 % des Externverkehrs führt zu anderen Regionalstationen und muß deshalb bedarfsgesteuert vermittelt werden. Als Zugriffsverfahren für das Sternnetz wurde der beispielsweise aus E.Herter, H.Rupp "Nachrichtenübertragung über Satelliten" 2. Auflage, Springer Verlag, Berlin, S.48ff bekannte Vielfachzugriff im Frequenzmultiplex gewählt, so daß das Sternnetz ein FDMA-System darstellt.

Für den Querverkehr zwischen den einzelnen Regionalstationen wurde aus den Vielfachzugriffsverfahren im Code-Multiplex (CDMA) das in der vorher erwähnten Literaturstelle Seiten 60-68 beschriebene Spreiz-Spektrum-Vielfachzugriffsverfahren gewählt, daß auch als SSMA bekannt ist. Bei diesem Verfahren wird jedes einzelne Bit der digitalisierten Nachricht mit einer in einem rückgekoppelten Schieberegister erzeugten Pseudozufallsfolge mit beispielsweise n = 63 Stellen multipliziert, so daß die spektrale Energie des betreffenden Bits auf 63 Stellen, sogenannte "Chips" verteilt ist. Um die Bandbreite in wirtschaftlich vertretbaren Grenzen zu halten, erfolgt vor dieser Multiplikation eine digitale Kompression von der ursprünglichen Datenrate von 64 kbit/s bei Sprachsignalen auf beispielsweise 9,6 kbit/s. Das erzeugte bandgespreizte Signal kann nun in einem separaten Frequenzband über den Satelliten übertragen werden oder mit einer wesentlich größeren Spreizung, die bis zu einem für den gesamten Sternverkehr benötigten Frequenzband gehen kann, den Übertragungssignalen des Sternverkehrs störungsfrei überlagert werden. Die Übertragungssignale werden von dem im Rundstrahlbetrieb arbeitenden Satelliten nach Umsetzung sowohl an die Regionalstationen als auch an die Zentralstation ausgesendet. Für jede der Regionalstationen ist dabei mindestens eine charakteristische Pseudozufallsfolge vorgesehen, mit der die Übertragungssignale multipliziert werden und die damit sowohl zur spektralen Spreizung der Sendesignale als auch als Adresse für die Zielstation dient.

Von entsprechenden in den Regionalstationen enthaltenen Empfängern werden die Empfangssignale auf das Auftreten der der jeweiligen Station zugeteilten charakteristischen Pseudozufallsfolge überwacht und entsprechende Empfangssignale mit der gleichen, örtlich erzeugten Pseudozufallsfolge multipliziert und dadurch die ursprüngliche digitale Nachricht wiedergewonnen. Durch spektrale Spreizung der im Codevielfach übertragenen Nachrichten der Maschenebene ME wird einerseits eine Störung der eigenen Übertragungssignale der Sternebene und andererseits eine Störung benachbarter Satelliten ohne hohe Anforderung an die Bündelungsschärfe der Antenne der Regionalstationen vermieden, da die Bündelung der Sendeenergie auf bestimmte Frequenzen vermieden wird. Die Kompression der Sprachsignale für die Übertragung zwischen den einzelnen Regionalstationen kann dabei umschaltbar geschaltet werden, so daß bei auftretenden Verkehrsspitzen zwischen den Regionalstationen ein höherer Kompressionsfaktor von 64 kbit/s auf unter 8 kbit/s eingestellt und dadurch die Übertragungskapazität des Maschennetzes bei geringfügig verminderter Übertragungsqualität erhöht werden kann, ohne daß eine Blockierung des gesamten Netzes auftritt.

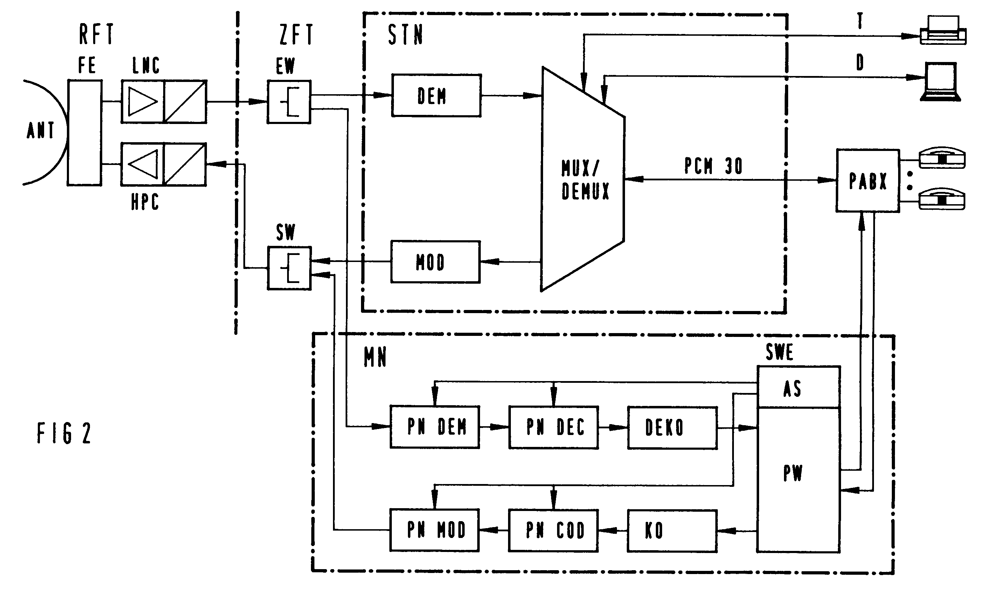

Die Aufteilung des erfindungsgemäßen Satelliten-Nachrichtenübertragungssystems in eine Sternebene SE mit einem Festzuweisungsteil des Verkehrs, eine Satellitenebene SATE und eine Maschenebene ME mit einem bedarfsgesteuerten Anteil spiegelt sich auch in der Struktur der Regionalstationen wieder. Die in der Figur 2 dargestellte Regionalstation enthält als Blöcke den Radio-Frequenzteil RFT, den Zwischenfrequenzteil ZFT, die IDR-Ebene mit den Baugruppen STNB für das Sternnetz bzw. die Sternebene, die CDMA-Ebene mit den Baugruppen MNB für das Maschennetz bzw. die Maschenebene sowie Anschlüsse für eine regionale Vermittlung PABX sowie für Telex- und Datenübertragung T, D.

Die Radiofrequenzebene RFT ist eingangsseitig an die Antenne ANT über ein Speisesystem FE mit Weichen angeschlossen, durch die Weichen wird das Empfangssignal vom Sendesignal getrennt und dem Empfangsverstärker und Umsetzer LNC zugeführt, während der Sendesignaleingang des Speisesystems FE an den Ausgang der Umsetzer- und Endverstärkerstufe HPC angeschlossen ist. Mit dem Ausgang des Empfangsverstärkers und Umsetzers LNC ist über eine ZF-Schnittstelle, ab der die Signale im Zwischenfrequenzbereich bei etwa 70 MHz vorliegen, eine Empfangsweiche EW verbunden. Diese Empfangsweiche enthält eine Erkennungsschaltung für die der betreffenden Regionalstation zugeteilte Pseudozufallsfolge, so daß am Ausgang der Empfangsweiche voneinander getrennt die Signale für das Sternnetz und das Maschennetz abgegeben werden. Die Signale für das Sternnetz gelangen zu einem Demodulator DEM, in dem die Demodulation ins Basisband und eine Regenerierung des Digitalsignals vorgenommen wird. Das Ausgangssignal des Demodulators DEM wird an einen kombinierten Multiplexer-Demultiplexer MUX/DEMUX abgegeben, in dem das Zeitmultiplexsignal in einzelne Übertragungskanäle, gegebenenfalls nach Echounterdrückung, aufgeteilt und einen Expanderprozeß unterworfen wird, durch den die sendeseitig vorgenommene digitale Kompression wieder aufgehoben wird. Nach der Expandierung können die einzelnen Übertragungssignale parallel an eine unmittelbar angeschlossene Regionalvermittlung oder nach Zusammenfassung beispielsweise zu einem PCM30-Signal an eine abgesetzte Regionalvermittlung weitergeleitet werden. Im Multiplexer-Demultiplexer MUX/DEMUX findet außerdem eine Extrahierung der mit den Sprachsignalen möglicherweise übertragenen Daten- und Telexsignale statt, die getrennt über entsprechende Anschlüsse abgegeben werden.

In der Gegenrichtung gelangen die von den Telex- bzw. Datenanschlüssen T, D aufgenommenen Signale zusammen mit den Ausgangssignalen der Regionalvermittlung PABX zum kombinierten Multiplexer-Demultiplexer MUX/DEMUX, die bereits in digitaler Form vorliegenden Sprachsignale können zusätzlich bspw. auf 16 kbit/s komprimiert werden, das digitale Signalbündel wird anschließend in ein Zeitmultiplexsignal mit einer Bitrate entsprechend einem Vielfachen von beispielsweise 64 kbit/s umgeformt und an den Modulator MOD abgegeben, der nach Umsetzung in die ZF-Ebene das erzeugte Zwischenfrequenzsignal an die Sendeweiche SW abgibt. Über einen weiteren Eingangsanschluß erhält die Sendeweiche SW die ebenfalls in die ZF-Ebene umgesetzten Ausgangssignale des Maschennetzes, die den Ausgangssignalen des Sternnetzes spektral überlagert werden. Das Kombinationssignal gelangt vom Ausgang der Sendeweiche SW zum Eingang der Umsetzer- und Endverstärkerstufe HPC, die das Sendesignal in der Radiofrequenzebene erzeugt.

In der Regionalvermittlung PABX, die auch zusätzliche Anschlüsse für Telex- und Datensignale aufweisen kann, werden die von den Teilnehmer stammenden und für die Satellitenübertragung vorgesehenen Signale je nach Zielstation auf das Sternnetz und das Maschennetz aufgeteilt und die für eine andere Regionalstation als Zielstation vorgesehenen Teilnehmersignale, gegebenenfalls nach Umformung in ein Zeitmultiplexsignal an eine Steuer- und Wandlereinrichtung SWE abgegeben, die einen Protokoll-Wandler PW und eine Ablaufsteuerung AS enthält. Die digitalen Ausgangssignale des Protokoll-Wandlers werden nach einer digitalen Kompression in einem Kompressor KO an einen Pseudozufallsfolgen-Codierer PNCOD abgegeben, in dem die Multiplikation der digitalen Signale mit derjenigen Pseudozufallsfolge erfolgt, auf die der Empfänger der Zielstation eingestellt ist. Der Pseudozufallsfolgen-Codierer PNCOD wird dabei von einem Ausgangssignal der in der Steuer- und Wandlereinrichtung SWE enthaltenen Ablaufsteuerung gesteuert, die eine Umschaltung des Pseudozufallsfolgen-Codierers auf die benötigte Pseudozufallsfolge veranlaßt. Das spektral gespreizte Ausgangssignal des Pseudozufallsfolgen-Codierers PNCODD wird im angeschlossenen Pseudozufallsfolgen-Modulator PNMOD in die ZF-Ebene umgesetzt und an einen entsprechenden Eingang der Sendeweiche SW abgegeben.

Empfangsseitig ist das Maschennetz der CDMA-Ebene mit einem Ausgang der Empfangsweiche EW der ZF-Ebene verbunden, die entsprechenden Signale werden eingangsseitig einem Pseudozufallsfolgen-Demodulator PNDEM zugeführt, der eine Umsetzung von der ZF-Ebene in das Basisband vornimmt und die erzeugten Basisbandsignale an einen Pseudozufallsfolgen-Decodierer PNDEC abgibt, der von der Ablaufsteuerung entsprechend gesteuert, eine Multiplikation des Basisbandsignals mit der stationseigenen Pseudozufallsfolge vornimmt und dadurch das digitale Übertragungssignal zurückgewinnt, das an einen nachgeschalteten Dekompressor bzw. Expander abgegeben wird. Durch die Expandierung wird die sendeseitig erfolgte Kompression aufgehoben und ein normgerechtes digitales Übertragungssignal an einen Eingang des Protokoll-Wandlers PW abgegeben, der die zum Übertragungssignal gehörenden Zusatzsignale in bekannter Weise so wandelt, daß die ausgangsseitig angeschlossene Regionalvermittlung PABX den weiteren Vermittlungsvorgang vornehmen kann.

Von der in der Steuerungs- und Handlereinrichtung SWE enthaltenen Ablaufsteuerung AS wird beim Aufbau einer Verbindung zu einer Zielstation der Pseudozufallsfolgen-Decodierer PNDEC zunächst auf eine der charakteristischen Pseudozufallsfolgen der Zielstation umgeschaltet und überprüft, ob im Ausgangssignal des Satelliten derart codierte Signale auftreten, da in diesem Falle die Zielstation hinsichtlich dieser Pseudozufallsfolge, bereits belegt ist. In diesem Falle wird, falls vorhanden, auf eine andere Adresse der Zielstation umgeschaltet oder nach entsprechender Zeit der Empfang der ursprünglichen Pseusozufallsfolge erneut veranlaßt, bis eine Verbindungsmöglichkeit mit der Zielstation besteht. Erst danach wird der Pseudozufallsfolgen-Decoder PNDEC auf die stationseigene Pseusozufallsfolge umgeschaltet und über den Protokoll-Wandler eine Freisignalisierung an die Regionalvermittlung PABX abgegeben.

Zusätzlich zu den Regionalstationen kann, beispielsweise zur Aufnahme von Verkehrsspitzen auch die Zentralstation ZSt an das Maschennetz angeschlossen sein. In diesem Falle ist die Zentralstation in der gleichen Weise ergänzt und erweitert wie die Regionalstationen. Dadurch ist auch, beispielsweise bei einem Fehler im zentralen Multiplexer-Demultiplexer und damit einem Ausfall des Sternnetzes, noch ein Notbetrieb der Zentralstation über das Maschennetz möglich. Die Zentralstation kann durch mehrere CDMA-Baugruppen MNB, die den Maschenebenen der einzelnen Regionalstationen entsprechen, so erweitert werden, daß von der Zentralstation aus eine Überwachung der Funktion der CDMA-Ebenen beispielweise unbemannter Kleinstationen als Regionalstationen möglich ist.

Aus den vorstehenden Ausführungen wird ersichtlich, daß ein stufenweiser Ausbau des erfindungsgemäßen Satellitensystem möglich ist. So kann nach dem Aufbau des Sternnetzanteils der einzelnen Stationen eine Erweiterung zunächst einiger Regionalstationen um die CDMA-Ebene erfolgen, bei denen ein besonders dringlicher Bedarf nach entsprechender Übertragungskapazität zu anderen Regionalstationen vorliegt. Anschließend können weitere Regionalstationen und/oder die Zentralstation entsprechend erweitert werden, ohne daß dies einen Einfluß auf die Übertragung im Sternnetz oder auf die Übertragungskapazität des Satelliten hat. Die Übertragungssignale des Maschennetzes können auch während einer bestimmten Ausbauphase in einem noch freien, separaten Frequenzband ohne spektrale Überlagerung von Sternnetzsignalen über den Satelliten übertragen werden.

## Patentansprüche

1. Satelliten-Nachrichtenübertragungssystem mit einer Zentralstation und einer Vielzahl über einen Satelliten sternförmig angeschlossener Regionalstationen, bei dem die Zentralstation über einen ersten Sendeträger die für alle Regionalstationen bestimmten Nachrichten zum Satelliten sendet, von dem nach einer ersten Fequenzumsetzung ein erster Empfangsträger im Rundstrahlbetrieb zur Erde zurückgesendet und von allen Regionalstationen empfangen und der für die jeweilige Regionalstation bestimmte Nachrichtenanteil detektiert wird, bei dem jede der Regionalstationen die für die Zentralstation bestimmten Nachrichten mit einem speziellen, durch die Übertragungsfrequenz ausgezeichneten Sendeträger zum Satelliten sendet, von dem nach erneuter Frequenzumsetzung eine der Anzahl der Regionalstationen und damit der Sendeträger entsprechende Anzahl von weiteren Empfangsträgern im Rundstrahlbetrieb zur Erde zurückgesendet werden,
**dadurchgekennzeichnet**,
daß zur Bildung eines zusätzlichen Maschennetzes in den als Maschenknoten vorgesehenen Regionalstationen auf den vierten Träger des Satelliten abgestimmte Empfänger mit einer Codemultiplex (CDMA)-Erkennungsschaltung für wenigstens einen bestimmten Empfangscode pro Regionalstation vorgesehen sind, daß die für eine andere Regionalstation als Zielstation bestimmten Übertragungssignale in der sendenden Regionalstation in den Empfangscode der Zielstation umgesetzt und wahlweise unter spektraler Überlagerung der für die Zentralstation bestimmten Übertragungssignale auf den zweiten Träger aufmoduliert werden oder in einem separaten Frequenzband über den Satelliten übertragen werden.

2. Satelliten-Nachrichtensystem nach Patentanspruch 1,
**dadurch gekennzeichnet**,
daß als Codemultiplex-Übertragungsverfahren im Maschennetz das als SSMA bekannte Spreiz-Spektrum-Vielfachzugriffsverfahren vorgesehen ist.

3. Satelliten-Nachrichtenübertragungssystem nach Patentansprüchen 1 und 2,
**dadurch gekennzeichnet**,
daß zur Übertragung von Sprachsignalen diese digitalisiert anschließend digital komprimiert und durch Modulation mit einer Pseudozufallsfolge spektral gespreizt werden.

4. Satelliten-Nachrichtenübertragungssystem nach Patentanspruch 1,
**dadurch gekennzeichnet**,
daß neben den Regionalstationen auch die Zentralstation als Knoten im Maschennetz mit wenigstens einem eigenen Empfangscode vorgesehen ist und die entsprechenden Sende- und Empfangseinrichtungen aufweist.

5. Satelliten-Nachrichtenübertragungssystem nach Patentansprüchen 1 oder 4,
**dadurch gekennzeichnet**,
auch Sende- und Empfangseinrichtungen für die den Regionalstationen zugeteilten Empfangscodes aufweist.

6. Satelliten-Nachrichtenübertragungssystem nach einem oder mehreren der Patentansprüche 1 bis 5,
**dadurch gekennzeichnet**,
daß zur Einleitung einer Verbindung über das Maschennetz die sendende Station einen unbelegten Empfangscode der Zielstation ermittelt und danach mit der Nachrichtenübertragung in diesem Code beginnt.
